(19) **Europäisches Patentamt / European Patent Office / Office européen des brevets**

(11) **EP 2 369 783 B1**

(12) **EUROPEAN PATENT SPECIFICATION**

(45) Date of publication and mention
of the grant of the patent:
**22.03.2017 Bulletin 2017/12**

(21) Application number: **09827153.9**

(22) Date of filing: **12.10.2009**

(51) Int Cl.:
*H04L 5/14* (2006.01)          *H04L 12/28* (2006.01)
*H04L 12/24* (2006.01)         *H04L 12/801* (2013.01)

(86) International application number:
**PCT/CN2009/074411**

(87) International publication number:
**WO 2010/057404 (27.05.2010 Gazette 2010/21)**

(54) **VDSL2 CONFIGURATION MANAGEMENT MODEL BASED ON ACTUAL BUSINESS APPLICATION SCENARIOS**

AUF TATSÄCHLICHEN GESCHÄFTSANWENDUNGSSZENARIEN BASIERENDES VDSL2-KONFIGURATIONSVERWALTUNGSMODELL

MODÈLE DE GESTION DE CONFIGURATION VDSL2 SUR LA BASE DE SCÉNARIOS D'APPLICATION COMMERCIALE RÉELS

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **24.11.2008 CN 200810217892**

(43) Date of publication of application:
**28.09.2011 Bulletin 2011/39**

(73) Proprietor: **ZTE Corporation**
**Shenzhen, Guangdong 518057 (CN)**

(72) Inventor: **SU, Chunshan**
**Guangdong 518057 (CN)**

(74) Representative: **V.O.**
**P.O. Box 87930**
**2508 DH Den Haag (NL)**

(56) References cited:
**WO-A1-2007/073700     CN-A- 1 713 679
CN-A- 101 163 034      US-A1- 2008 212 660**

• **"Very high speed digital subscriber line transceivers 2 (VDSL2); G.993.2 (02/06)", ITU-T STANDARD, INTERNATIONAL TELECOMMUNICATION UNION, GENEVA ; CH, no. G.993.2 (02/06), 17 February 2006 (2006-02-17), pages 1-252, XP017465275, [retrieved on 2007-01-30]**
• **"TECHNICAL REPORT Protocol-Independent Management Model for Next Generation DSL Technologies", , 1 December 2006 (2006-12-01), XP055185772, Retrieved from the Internet: URL:https://www.broadband-forum.org/techni cal/download/TR-129.pdf [retrieved on 2015-04-24]**
• **'TR-165 Vector of Profiles Issue 1. Broadband Forum Technical Report' TR-165 VECTOR OF PROFILES ISSUE 1, [Online] no. 1, March 2009, pages 15 - 19, XP008148937 Retrieved from the Internet: <URL:http://www.broadband-forum.org/technic al/download/TR-165.pdf> [retrieved on 2010-01-06]**
• **"TR-165 Vector of Profiles Issue 1. Broadband Forum Technical Report", TR-165 VECTOR OF PROFILES ISSUE 1,, 1 March 2009 (2009-03-01), pages 1-25, XP008148937,**

**Description**

**Technical field of the invention**

The present invention relates to the broadband communication field, and specifically to a VDSL2 configuration management model based on actual service application scenarios.

**Background of the invention**

A second generation very-high-bit-rate digital subscriber loop (VDSL2) is a high-speed broadband access mode based on copper cables. The High-speed broadband is established on the basis of the transmission of high-frequency signals, which are extremely sensitive to factors such as the noise and the attenuation of an access line when transmitted in the copper cables. These factors are externally presented with the diameter, the length and the noise of the copper cables and other external environmental factors, which are closely related with some of the configuration parameters of VDSL2.

The VDSL2 is an accessing technology for a next generation digital subscriber loop (DSL) in the field of the telecommunication broadband access. In related art, the 'broadband forum' (the former 'DSL forum') has defined a VDSL2 line management model including a configuration management model, and the related technical standard is as follows:

Digital Subscriber Loop Forum Technical Report: TR-129 Protocol-Independent Management Model for Next Generation DSL Technologies, 12 December 2006.

In addition, an Internet engineering task force (IETF) is developing the following standard for the VDSL2 loop management model:

Definitions of Managed Objects for Very High Speed Digital Subscriber Line 2.

The VDSL2 line configuration management model established by the aforementioned two standard organizations are based on the following substantially identical idea: line configuration parameters of the VDSL2 are divided into multiple groups, each of which is called a profile, and different profiles constitute a template. Parameters are configured for a VDSL2 line subscriber as long as a corresponding template is associated with the line.

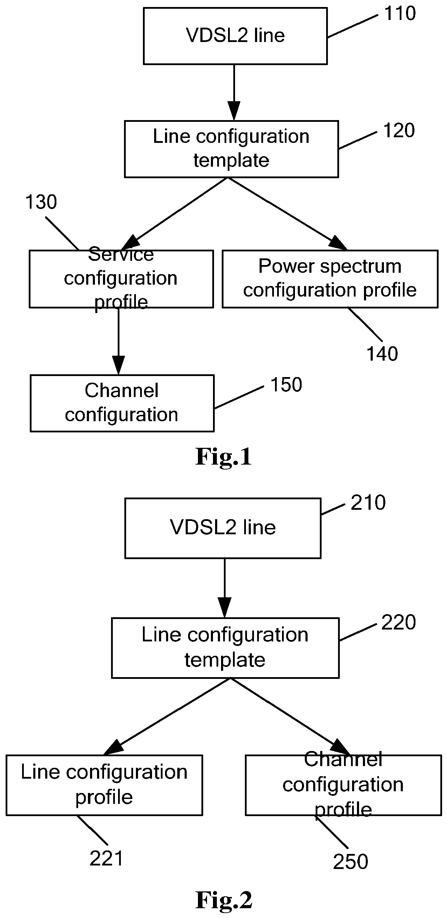

Fig. 1 is a schematic diagram illustrating the relation between a line and each configuration profile in a VDSL2 line configuration management model according to the TR-129 standard in the related art. As shown in Fig. 1, a configuration management model comprises a line configuration template 120 which is directly configured to a VDSL2 line 110, and the line configuration template 120 further comprises a service configuration profile 130 and a power spectrum configuration profile 140, wherein the service configuration profile 130 further comprises a channel configuration 150.

Fig. 2 is a schematic diagram illustrating the relation between a line and each configuration profile in a VDSL2 line configuration management model according to the IETF standard draft in the related art, as shown in Fig. 2, a configuration management model comprises a line configuration template 220 which is directly configured to a VDSL2 line 210, and the line configuration template 220 further comprises a line configuration profile 221 and a channel configuration profile 250. Therefore, it can be concluded from the above Fig. 1 and Fig. 2 that the two VDSL2 line configuration management models are substantially identical.

However, such models defined by TR-129 and IETF have the following problems: the changes in environment-sensitive factors will bring about the generation of a series of configuration templates to adapt to these changes and lead eventually to the generation of a great number of configuration templates with the changes of the environment factors; moreover, on the one hand, with the increase of the number of the configuration templates, a great amount of memory will be consumed to store the configuration templates, and on the other hand, the increase of the number of the configuration templates will also make the management more difficult and complicated.

For instance, in actual service application scenarios, a service configuration profile is mainly used for defining a service rate, there may be dozens of service configuration profiles for different application scenarios, and it is assumed herein that the number (n) of the service configuration profiles is 20; a power spectrum configuration profile is mainly used for defining parameters related to environmental noise, cable length, line diameter and so on, hundreds of such configuration profiles may be provided in a network to adapt to the changes in environment, and it is assumed herein that the number (m) of the power spectrum configuration profiles is 300; thus, the number of the configuration templates may be: $m \times n = 300 \times 20 = 6000$.

Under the ADSL of the related art, there are only 20-30 configuration profiles which need to be managed, however, in an application scenario of the VDSL2, due to the increased sensitivity to environmental factors, the same management mode will lead to a significant increase in the configuration templates to adapt to various environmental changes, thus, it is obviously difficult to manage the VDSL2 with this management mode, moreover, such configuration templates will occupy much memory in network elements, making the application of the VDSL2 more difficult and limiting the popularization of the VDSL2.

It is noted that the document "Very high speed digital subscriber line transceivers 2 (VDSL2); G.993.2 (02/06)" discloses a VDSL2 access technology that exploits an existing infrastructure of copper wires that were originally deployed for POTS services. It is further noted that the document "Technical report Protocol-Independent Management Model for Next Generation DSL Technologies" discloses a protocol-independent management model for ADSL, ADSL2, ADSL2plus and VDSL2.

**Summary of the invention**

Aiming at the problem that a significant amount of the templates will make management more difficult and consume a great deal of memory to manage a VDSL2 line, the present invention is disclosed with a main object of providing a VDSL2 configuration management model based on actual service application scenarios to address the problem above.

In order to achieve the object above, in accordance with an aspect of the present invention, there is provided a VDSL2 configuration management model based on actual service application scenarios, which comprises: a VDSL2 line and an upstream rate profile, a downstream rate profile, a noise margin profile, an interleaving delay and impulse noise protection profile and a power spectrum profile, all of which are associated with the VDSL2 line; wherein the VDSL2 line is used to specify the upstream rate profile and the downstream rate profile, and configure a power management state; the upstream rate profile is used to configure an upstream data rate of the line; the downstream rate profile is used to configure a downstream data rate of the line; the power spectrum profile is used to configure a power spectrum density profile of a sub-carrier; the noise margin profile is used to configure an upstream target noise margin, a downstream target noise margin and noise margin parameters of the line; and the interleaving delay and impulse noise protection profile is used to configure a forced impulse noise protection, a minimum impulse protection on each sub-carrier and a maximum interleaving delay parameter on each sub-carrier.

Preferably, the model further comprises: a radio frequency interference (RFI) profile, which is associated with the VDSL2 line and is used to configure related parameters of a radio frequency interference notch on the line.

Preferably, the model further comprises: a downstream power back-off configuration profile, which is associated with the VDSL2 line and is used to configure downstream power back-off parameters to adapt to electrical characteristics of a cable of a downstream line.

Preferably, the model further comprises: an upstream power back-off configuration profile, which is associated with the VDSL2 line and is used to configure upstream power back-off parameters and electrical characteristics and waveband parameters of an upstream line.

Preferably, the model further comprises: a virtual noise profile, which is associated with the VDSL2 line and is used to configure related parameters of upstream and downstream transmitter referred virtual noises on the line.

Preferably, the upstream rate profile further comprises the following configuration parameters: a minimum upstream reservation rate, a maximum upstream reservation rate, an upstream rate adaptation ratio, a minimum rate in a low power consumption state, a maximum upstream error rate, an upper adjusting limit for an upstream rate, a lower adjusting limit for the upstream rate, and an actual service upstream rate used in defined application scenarios.

Preferably, the downstream rate profile further comprises the following configuration parameters: a minimum downstream reservation rate, a maximum downstream reservation rate, a downstream rate adaptation ratio, a minimum rate in a low power consumption state, a maximum downstream error rate, an upper adjusting limit for a downstream rate, a lower adjusting limit for the downstream rate, and an actual service downstream rate used in defined application scenarios.

Preferably, the noise margin configuration model further comprises the following configuration parameters for adapting environmental noises: a downstream target noise margin, an upstream target noise margin, a maximum downstream noise margin, a maximum upstream noise margin, a minimum downstream noise margin and a minimum upstream noise margin.

Preferably, the interleaving delay and impulse noise protection profile further comprises the following configuration parameters for adapting an interleaving delay of the line and environmental impulse noise protection: a forced impulse noise protection, a minimum impulse noise protection of each sub-carrier, a minimum impulse noise protection 8kHz of each sub-carrier, and a maximum interleaving delay of each sub-carrier.

By canceling the configuration mode of the prior configuration templates and further subdividing the configuration granularities of the prior service configuration profile and power spectrum profile, the present invention solves the problem that a great number of templates makes management more difficult and consume much memory to manage the line, and therefore improves the expansion of a VDSL2 line configuration management model and the adaptation of the VDSL2 line configuration management model to different application scenarios.

**Brief description of the drawings**

Fig. 1 is a schematic diagram illustrating the relation between a line and each configuration profile in a VDSL2 line configuration management model according to the TR-129 standard in the related art;

Fig. 2 is a schematic diagram illustrating the relation between a line and each configuration profile in a VDSL2 line configuration management model according to the IETF standard draft in the related art;

Fig.3 is a schematic diagram illustrating the relation between a line and each configuration profile in a VDSL2 line configuration management model according to an embodiment of the present invention.

**Detailed description of embodiments**

Function summary

Considering the problem existing in the related art that the existence of a great number of templates makes the management more difficult and consumes a great deal of memory to manage lines, the present invention provides a VDSL2 configuration management model based on actual service application scenarios. By canceling the configuration mode of the former configuration templates and further subdividing the configuration granularities of the former service configuration profile and power spectrum profile, the present invention decreases the number of configuration profiles resulting from the combinations of VDSL2 configuration management models in various actual service application scenarios and consequentially reduces the VDSL2 line (loop) management difficulty for a manager; meanwhile, the present invention can reduce the memory of a VDSL2 device occupied for a line management and save the space of the VDSL2 device occupied by configuration profiles to improve the expansion of a VDSL2 line configuration management model and the adaptation of the VDSL2 line configuration management model to different application scenarios.

It should be noted that the embodiments of the present invention and the features thereof can be mutually combined if no conflict is caused, and the present invention is described below in detail by reference to embodiments in conjunction with accompanying drawings.

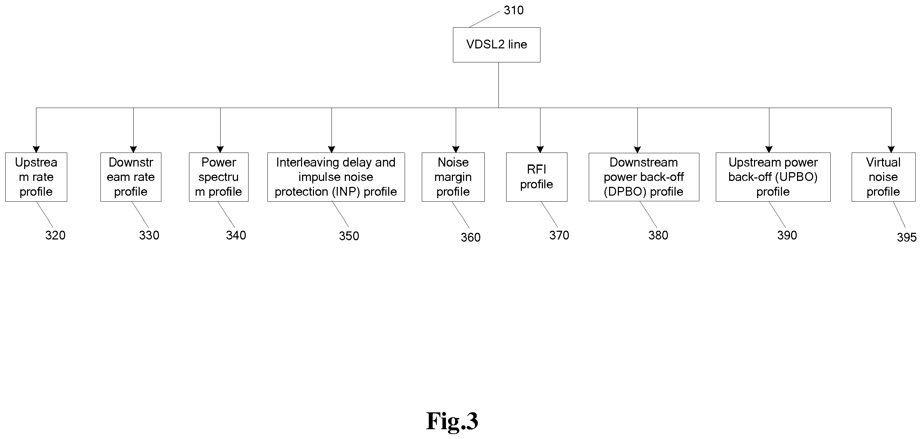

According to an embodiment of the present invention, there is provided a VDSL2 configuration management model based on actual service application scenarios. Fig. 3 is a schematic diagram illustrating the relation between a line (loop) and each configuration profile in a VDSL2 line configuration management model according to this embodiment. As shown in Fig. 3, the VDSL2 line configuration management model comprises a VDSL2 line and an upstream rate profile, a downstream rate profile, a power spectrum profile, a noise margin profile, an interleaving delay and impulse noise protection profile associated with the VDSL2 line.

In the above, the VDSL2 line is used to specify the upstream rate profile and the downstream rate profile and configure a power management state; the upstream and downstream rate profiles are respectively used to configure the maximum and minimum data rates of an upstream line and a downstream line; the power spectrum profile is used to configure the power spectrum density profile (mask) of each sub-carrier; the noise margin profile is used to configure the upstream target noise margin, the downstream target noise margin, the maximum noise margin parameter and minimum noise margin parameter of the line; and the interleaving delay and impulse noise protection profile is used to configure a forced impulse noise protection, the minimum impulse protection on each sub-carrier and the maximum interleaving delay parameter on each sub-carrier.

In the above, the model further comprises a radio frequency interference (RFI) profile which is associated with the VDSL2 line and is used to configure related parameters of a radio frequency interference notch on the line.

In the above, the model further comprises: a downstream power back-off profile, which is associated with the VDSL2 line and is used to configure downstream power back-off parameters to adapt to the electrical characteristics of a cable of a downstream line.

In the above, the model further comprises: an upstream power back-off profile, which is associated with the VDSL2 line and is used to configure upstream power back-off parameters and the electrical characteristics and waveband parameters of an upstream line.

In the above, the model further comprises: a virtual noise profile, which is associated with the VDSL2 line and is used to configure related parameters of upstream and downstream transmitter referred virtual noises on the line.

In the above, the upstream rate profile further comprises the following configuration parameters: the minimum upstream reservation rate, the maximum upstream reservation rate, an upstream rate adaptation ratio, the minimum rate in a low power consumption state, the maximum upstream error rate, an upper adjusting limit for an upstream rate, a lower adjusting limit for the upstream rate, and an actual service upstream rate used in defined application scenarios.

In the above, the downstream rate profile further comprises the following configuration parameters: the minimum downstream reservation rate, the maximum downstream reservation rate, a downstream rate adaptation ratio, the minimum rate in a low power consumption state, the maximum downstream error rate, an upper adjusting limit for a downstream rate, a lower adjusting limit for the downstream rate, and an actual service downstream rate used in defined application scenarios.

In the above, the noise margin model further comprises the following configuration parameters for adapting environmental noises: a downstream target noise margin, an upstream target noise margin, the maximum downstream noise margin, the maximum upstream noise margin, the minimum downstream noise margin and the minimum upstream noise margin.

In the above, the interleaving delay and impulse noise protection profile further comprises the following configuration parameters for adapting an interleaving delay of the line and environmental impulse noise protection: a forced impulse noise protection, the minimum impulse noise protection of each sub-carrier, the minimum impulse noise protection 8kHz of each sub-carrier, and the maximum interleaving delay of each sub-carrier.

In the above, the RFI profile further comprises the following configuration parameter: radio frequency interference band.

In the above, the downstream power back-off profile further comprises the following configuration parameters for adapting the electrical characteristics of a cable: downstream power back-off of assumed exchange power spectrum density, downstream power back-off E-side electrical length, downstream power back-off E-side cable model, downstream power back-off minimum usable signal, downstream power back-off span minimum frequency, and downstream power back-off span maximum frequency.

In the above, the upstream power back-off profile further comprises the following configuration parameters for adapting the electrical characteristics of a cable: upstream power back-off loop length (electrical length), forced CO-MIB electrical length (force CO-MIB electrical loop length), upstream power back-off reference PSD (Upstream power back-off reference PSD per band) U0, U1 waveband parameter A, and upstream power back-off reference PSD (Upstream power back-off reference PSD per band) U0, U1 waveband parameter B.

In the above, the virtual noise profile further comprises the following configuration parameters for adapting the upstream and downstream transmitter referred virtual noises on the line: upstream transmitter referred virtual noises and downstream transmitter referred virtual noises.

The core of the embodiments of the present invention lies in that, by canceling the prior configuration templates and subdividing the granularities of the service configuration profile and power spectrum configuration profile, the total number of the prior VDSL2 line configuration profiles is reduced, wherein IETF, TR-129 and VDSL2 and the like are well known by those skilled in the art, and therefore no more repeated description is given herein.

It should be noted that the means for forming a profile with configuration parameters, assembling the profiles into a template, and directly configuring the template to a VDSL2 line and the functions of each configuration parameter and each profile as well as the relations between configuration parameters and between profiles are all same as those of the prior art; the difference of the embodiments of the present invention from the prior art lies in that templates are cancelled, the profiles are directly associated with a VDSL2 line, and the configuration parameters forming each profile are different, in other words, each configuration parameter is differently located on the above profiles, resulting eventually in a significant drop in the total number of the configuration profiles of the VDSL2 line. The following description is given in the aspect of the configuration parameters forming the profile based on the difference of the embodiments of the present invention from the prior art, that is, the profiles and configuration parameters illustrated below, the association relation thereof and the working principle thereof are well known by those skilled in the art, so no more repeated description is given here.

The implementation process of the embodiments of the present invention is described below in detail by reference to examples.

As shown in Fig.3, there is provided a VDSL2 configuration management model based on actual service application scenarios, comprising a VDSL2 line 310 and an upstream rate profile 320, a downstream rate profile 330, a power spectrum profile 340, an interleaving delay and impulse noise protection profile 350, a noise margin profile 360, an RFI profile 370, a downstream power back-off profile 380, an upstream power back-off profile 390 and a virtual noise profile 395 which are all directly associated with the VDSL2 line 310.

In the above, the VDSL2 line 310 comprises a VDSL2 line; the interleaving delay and impulse noise protection profile 350 is used for configuring the minimum impulse noise protection for each channel and the maximum interleaving delay parameter thereof; the noise margin profile 360 is used for configuring an upstream target noise margin, a downstream target noise margin and the maximum and minimum noise margin parameters thereof; the RFI profile 370 is used for configuring a radio frequency interference band notch parameter; the downstream power back-off profile 380 is used for configuring downstream power back-off parameters for adapting the electrical characteristics of a cable of a downstream line; the upstream power back-off profile 390 is used for configuring upstream power back-off parameters and the electrical characteristics and waveband parameters of the upstream line; and the virtual noise profile 395 is used for configuring upstream and downstream virtual noises referred by a transmitter. The model is described below in detail.

1. In a configuration management model based on the TR-129 standard of the related art, configuration parameters including the following ones are defined for the VDSL2 line 310:

1) power spectrum profile name (Spectrum Profile Name),
2) forced power management state (Power Management State Forced, PMSF for short),
3) forced loop diagnostics mode (Loop Diagnostics Mode Forced),
4) forced automatic cold start mode (Automode Cold Start Forced), and
5) power management state (Power Management State).
In the configuration management model of the embodiments of the present invention, the following configuration parameters are also defined for the VDSL2 310 :
6) upstream rate profile (Upstream Rate Profile Name),
7) downstream rate profile (Downstream Rate Profile Name),
8) interleaving delay and impulse noise protection (INP) profile (Delay and INP Profile Name),
9) radio frequency interference (RFI) profile (RFI Profile Name),
10) noise margin profile (Noise Margin Profile Name),
11) upstream power back-off (UPBO) profile (UPBO Profile Name),
12) downstream power back-off (UPBO) profile (DPBO Profile Name), and
13) virtual noise profile (Virtual Noise Profile Name),
The VDSL2 line 310 mainly functions to specify the names of the various profiles used for the VDSL2 line and configure forced power management state, forced loop diagnostics mode, forced automatic cold start mode, power management state and other operations and states of the line.

2. In the configuration management model based on the TR-129 standard of the related art, the upstream rate profile 320 is not defined, and in the embodiments of the present invention, the upstream rate profile is defined to contain the following main configuration parameters:

1) upstream rate auto-adaptation mode (Rate Adaptation Mode upstream),
2) minimum upstream rate (Minimum Data Rate upstream),
3) maximum upstream rate (Maximum Data Rate upstream),
4) upstream rate adaptation ratio (Rate Adaptation Ratio upstream), and
5) minimum upstream rate in low power consumption state (Minimum Data Rate in low power state upstream).
The upstream rate profile 320 mainly functions to configure the upstream rate parameters related to a VDSL2 broadband access service and various upstream rates and rate modes.

3. In the configuration management model based on the TR-129 standard of the related art, the downstream rate profile 330 is not defined, however, in the embodiments of the present invention, the downstream rate profile is defined to contain the following main configuration parameters:

1) downstream rate auto-adaptation mode (Rate Adaptation Mode downstream),
2) minimum downstream rate (Minimum Data Rate downstream),
3) maximum downstream rate (Maximum Data Rate downstream),
4) downstream rate adaptation ratio (Rate Adaptation Ratio downstream), and
5) minimum downstream rate in low power consumption state (Minimum Data Rate in low power state downstream).
The downstream rate profile 330 mainly functions to configure the downstream rate parameters related to a DSL broadband access service and various downstream rates and rate modes.

4. In a configuration management model based on the TR-129 standard of the related art, the following main configuration parameters are defined to be included in the power spectrum profile 340:

1) xTU transmission mode enabling (xTU Transmission System Enabling, XTSE for short),
2) power management state enabling (Power Management State Enabling, PMMode for short),
3) upstream sub-channel profile (upstream subcarrier masking) (CARMASK upstream),
4) downstream sub-channel profile (downstream subcarrier masking) (CARMASK downstream),
5) VDSL2 sub-channel profile (VDSL2 subcarrier masking) (VDSL2-CARMASK),

6) VDSL2 standard profile enabling (VDSL2 Profiles Enabling),

7) VDSL2 upstream waveband 0 power spectrum density (PSD) profile enabling (VDSL2 US0 PSD Masks Enabling, that is, US0MASK),

8) L0 minimum time interval (L0-TIME),

9) L2 minimum time interval (L2-TIME),

10) maximum aggregate transmit power reduction in L2 state (L2-ATRP),

11) minimum upstream overhead rate (MSGMIN upstream),

12) minimum downstream overhead rate (MSGMIN downstream), and

13) optional cyclic extension flag (CEFLAG).

The power spectrum profile defined in the TR-129 standard of the related art functions to configure power spectrum related parameters, mainly to configure transmission mode, noise margin profile, power spectrum density profile of sub-carriers, VDSL2 sub-channel profile, VDSL2 standard profile enalbing, RFI freuency band configuration, virtual noise and so on; however, in the configuration management model of the embodiments of the present invention, the parameters above are configuration parameters simplified from the TR-129 standard of the prior art and have been independently classified to other profiles or the VDSL2 line so that the power spectrum profile 340 can mainly function to configure the power spectrum density profile of the sub-carriers.

5. The interleaving delay and impulse noise protection profile 350 is not defined in the configuration management model based on the TR-129 standard of the related art, however, it is defined in the embodiments of the present invention that the interleaving delay and impulse noise protection profile 350 comprises the following main configuration parameters to adapt an environmental impulse noise protection:

1) forced impulse noise protection (FORCEINP),

2) minimum impulse noise protection of each channel (INPMIN),

3) minimum impulse noise protection 8kHz of each channel (INPMIN8), and

4) maximum interleaving delay of each channel (Maximum Interleaving Delay).

The interleaving delay and impulse noise protection profile 350 mainly functions to configure a forced impulse noise protection and the minimum impulse protection and the maximum interleaving delay on each sub-carrier.

6 In the configuration management model based on the TR-129 standard of the related art, the noise margin profile 360 is not defined, however, in the embodiments of the present invention, the noise margin profile 360 is defined to contain the following main configuration parameters:

1) upstream target noise margin (TARSNRM upstream),

2) downstream target noise margin (TARSNRM downstream),

3) upstream maximum noise margin (TARSNRM upstream),

4) downstream maximum noise margin (TARSNRM downstream),

5) upstream minimum noise margin (TARSNRM upstream), and

6) downstream minimum noise margin (TARSNRM downstream).

The noise margin profile 360 functions to configure various noise margins and is mainly used for configuring upstream and downstream target noise margins, maximum and minimum noise margins and so on.

7) In the configuration management model based on the TR-129 standard of the related art, the RFI profile 370 is not defined, however, in the embodiments of the present invention, the RFI profile 370 is defined to contain the following main configuration parameter to adapt an RFI band:

1) RFI band.

8. In the configuration management model based on the TR-129 standard of the related art, the downstream power back-off profile 380 is not defined, however, in the embodiments of the present invention, the downstream power back-off profile 380 is defined to contain the following main configuration parameters to adapt the electrical characteristics of a cable:

1) downstream power back-off of assumed exchange power spectrum density (DPBOEPSD),

2) downstream power back-off E-side electrical length (DPBOESEL),

3) downstream power back-off E-side cable model (DPBOESCMA, DPBOESCMB and DPBOESCMC),

4) downstream power back-off minimum usable signal (DPBOMUS),

5) downstream power back-off span minimum frequency (DPBOFMIN), and

6) downstream power back-off span maximum frequency (DPBOFMAX).

The downstream power back-off profile 380 mainly functions to configure DPBO related parameters.

9. In the configuration management model based on the TR-129 standard of the related art, the upstream power back-off profile 390 is not defined, however, in the embodiments of the present invention, the upstream power back-off profile 390 is defined to contain the following main configuration parameters to adapt the electrical characteristics of a cable:

1) upstream power back-off electrical loop length (UPBOKL),
2) forced CO-MIB electrical length (Force CO-MIB electrical loop length) (UPBOKLF),
3) upstream power back-off reference PSD U0, U1 waveband parameter A (Upstream power back-off reference PSD per band, UPBOPSD-pb), and
4) upstream power back-off reference PSD U0, U1 waveband parameter B (Upstream power back-off reference PSD per band, UPBOPSD-pb).
The upstream power back-off profile 390 is mainly used for configuring UPBO related parameters.

10. In the configuration management model based on the TR-129 standard of the related art, the virtual noise profile 395 is not defined. However, in the embodiments of the present invention, the virtual noise profile 395 is defined to contain the following main configuration parameters to adapt the characteristics of the referred virtual upstream and downstream noises of the line:

1) upstream transmitter referred virtual noise (TXREFVN upstream), and
2) downstream transmitter referred virtual noise (TXREFVN downstream).
The example of each profile in the configuration model above is identified by a specific profile name, that is, a profile name is an index which can be freely determined by a telecommunication operator and is a practical solution obtained by simplifying standards of TR-129 and IETF according to the requirements of a telecommunication operator.

Finally, the utilization of the configuration management model provided in the embodiments of the present invention is illustrated based on the examples given in the background of the present invention:

the number of upstream and downstream rate profiles: n=20;
the number of power spectrum profiles: m=5 (approximate to the number of service types);
the number of noise margin profiles: o=5 (approximate to the number of service types);
the number of interleaving delay and impulse noise protection (INP) profiles: p=5 (approximate to the number of service types);
the number of downstream power back-off (DPBO) profiles: q=5 (approximate to the number of service types);
the number of upstream power back-off (UPBO) profiles: r=5 (approximate to the number of service types);
the number of RFI profile: s=1.

According to the relation shown in Fig. 3, the template is cancelled, then each configuration profile can be directly associated with the VDSL2 line, so the total number of the configuration profiles is changed from the prior product of profile numbers to the sum of the profile numbers:

$$m+n+o+p+q+r+s=20+5+5+5+5+5+1=46$$

It can be thus concluded that in the solution of the present invention, the total number of the profiles is far smaller than that of the configuration profiles in the prior standard.

Another innovation of the present invention lies in that the former service configuration profile and power spectrum configuration profile are equivalently subdivided into configuration profiles with smaller granularity, thus, the problem is perfectly addressed that a great number of configuration profiles are defined for the combinations of various factors due to the concentration of the former parameters in 2-3 profiles, and consequentially, the total number of the configuration profiles is further reduced.

According to the practical application, the technology for canceling the template and subdividing the service configuration profile and the power spectrum profile used in the preferred embodiments mentioned above may utilize various probable solutions that are well known by those skilled in the art, so no more repeated description is given here.

In conclusion, according to the above embodiments of the present invention, there is provided a VDSL2 configuration management model based on actual application scenarios, as the configuration mode of the former configuration template is cancelled and the configuration granularity of the former upstream and downstream rate profile and power spectrum profile is further subdivided, the number of the configuration profiles generated from the combination of VDSL2 configuration management models for various actual service application scenarios is greatly reduced, the difficulty of VDSL2 line management is reduced for a manager, and the memory on a VDSL2 device occupied for line management is reduced as well, as a consequence, the space occupied by the configuration profiles on the VDSL2 device is saved, and the expansion of the VDSL2 line configuration management model and the adaptation of the VDSL2 line configuration management model to different application scenarios are also improved.

It should be appreciated that improvements and variations can be made by those skilled in the art according to the description for the solution provided in the present invention, such as the variations in the names of the profiles or the configuration parameters, and that such improvements and modifications all belong to the scope of the protection of the attached claims of the present invention.

**Claims**

1. A second generation very-high-bit-rate digital subscriber loop (VDSL2) configuration management method based on actual service application scenarios, comprising: providing a VDSL2 line (310) and an upstream rate profile (320), a downstream rate profile (330), a noise margin profile (360), an interleaving delay and impulse noise protection profile (350) and a power spectrum profile (340), wherein

   the VDSL2 line (310) is used to specify the upstream rate profile and the downstream rate profile, and configure a power management state;

   the upstream rate profile (320) is used to configure an upstream data rate of the line;

   the downstream rate profile (330) is used to configure a downstream data rate of the line;

   the noise margin profile (360) is used to configure an upstream target noise margin, a downstream target noise margin and noise margin parameters of the line;

   the interleaving delay and impulse noise protection profile (350) is used to configure a forced impulse noise protection, a minimum impulse protection on each sub-carrier and a maximum interleaving delay parameter on each sub-carrier; and

   the power spectrum profile (340) is used to configure a power spectrum density profile of a sub-carrier. the method being **characterized in that** all said profiles are directly associated with the VDSL2 line.

2. The method according to claim 1, **characterized in that** the method further comprises: a radio frequency interference (RFI) profile (370), which is directly associated with the VDSL2 line (310) and is used to configure related parameters of a radio frequency interference notch on the line.

3. The method according to claim 1, **characterized in that** the method further comprises: a downstream power back-off configuration profile (380), which is directly associated with the VDSL2 line (310) and is used to configure downstream power back-off parameters to adapt to electrical characteristics of a cable of a downstream line.

4. The method according to claim 1, **characterized in that** the method further comprises: providing an upstream power back-off configuration profile (390), which is directly associated with the VDSL2 line (310) and is used to configure upstream power back-off parameters and electrical characteristics and waveband parameters of an upstream line.

5. The method according to claim 1, **characterized in that** the method further comprises: providing a virtual noise profile (395), which is directly associated with the VDSL2 line (310) and is used to configure related parameters of upstream and downstream transmitter referred virtual noises on the line.

6. The method according to claim 1, **characterized in that** the upstream rate profile (320) further comprises the following configuration parameters: a minimum upstream reservation rate, a maximum upstream reservation rate, an upstream rate adaptation ratio, a minimum rate in a low power consumption state, a maximum upstream error rate, an upper adjusting limit for an upstream rate, a lower adjusting limit for the upstream rate, and an actual service upstream rate used in defined application scenarios.

7. The method according to claim 1, **characterized in that** the downstream rate profile (330) further comprises the following configuration parameters: a minimum downstream reservation rate, a maximum downstream reservation rate, a downstream rate adaptation ratio, a minimum rate in a low power consumption state, a maximum downstream error rate, an upper adjusting limit for a downstream rate, a lower adjusting limit for the downstream rate, and an actual service downstream rate used in defined application scenarios.

8. The method according to claim 1, **characterized in that** the noise margin profile (360) further comprises the following configuration parameters for adapting environmental noises: a downstream target noise margin, an upstream target noise margin, a maximum downstream noise margin, a maximum upstream noise margin, a minimum downstream noise margin and a minimum upstream noise margin.

9. The method according to claim 1, **characterized in that** the interleaving delay and impulse noise protection profile (350) further comprises the following configuration parameters for adapting an interleaving delay of the line and environmental impulse noise protection: a forced impulse noise protection, a minimum impulse noise protection of each sub-carrier, a minimum impulse noise protection 8kHz of each sub-carrier, and a maximum interleaving delay of each sub-carrier.

**Patentansprüche**

1. Auf tatsächlichen Geschäftsanwendungsszenarien basierendes Konfigurationsverwaltungsverfahren der zweiten Generation mit digitaler Teilnehmerschleife mit sehr hoher Bitrate (VDSL2), umfassend: die Bereitstellung einer VDSL2-Leitung (310) und eines Upstream-Ratenprofils (320), eines Downstream-Ratenprofils (330), eines Rauschspannenprofils (360), einer Interleaving-Verzögerung und eines Impulsrauschschutzprofils (350) und eines Leistungsspektrumsprofils (340),
wobei
die VDSL2-Leitung (310) verwendet wird, um das Upstream-Ratenprofil und das Downstream-Ratenprofil zu spezifizieren und einen Leistungsverwaltungszustand zu konfigurieren;
das Upstream-Ratenprofil (320) verwendet wird, um eine Upstream-Datenrate der Leitung zu konfigurieren
das Downstream-Ratenprofil (330) verwendet wird, um eine Downstream-Datenrate der Leitung zu konfigurieren;
das Rauschspannenprofil (360) verwendet wird, um eine Upstream-Zielrauschspanne, eine Downstream-Zielrauschspanne und Rauschspannenparameter der Leitung zu konfigurieren;
die Interleaving-Verzögerung und das Impulsrauschschutzprofil (350) verwendet werden, um einen erzwungenen Impulsrauschschutz, einen minimalen Impulsschutz auf jedem Zwischenträger und einen maximalen Interleaving-Verzögerungsparameter auf jedem Zwischenträger zu konfigurieren; und
das Leistungsspektrumsprofil (340) verwendet wird, um ein Leistungsspektrumsdichteprofil eines Zwischenträgers zu konfigurieren, wobei das Verfahren **dadurch gekennzeichnet ist, dass** die Profile direkt der VDSL2-Leitung zugeordnet sind.

2. Verfahren nach Anspruch 1, **dadurch gekennzeichnet, dass** das Verfahren ferner umfasst: ein Funkfrequenzinterferenz (RFI)-Profil (370), das direkt der VDSL2-Leitung (310) zugeordnet ist und verwendet wird, um zugehörige Parameter eines Funkfrequenzinterferenz-Notch auf der Leitung zu konfigurieren.

3. Verfahren nach Anspruch 1, **dadurch gekennzeichnet, dass** das Verfahren ferner umfasst: ein Downstream Power Back-off-Konfigurationsprofil (380), das direkt der VDSL2-Leitung (310) zugeordnet ist und verwendet wird, um Downstream Power Back-off-Parameter zur Anpassung an elektrische Merkmale eines Kabels einer Downstream-Leitung zu konfigurieren.

4. Verfahren nach Anspruch 1, **dadurch gekennzeichnet, dass** das Verfahren ferner umfasst: die Bereitstellung eines Upstream Power Back-off-Konfigurationsprofils (390), das direkt der VDSL2-Leitung (310) zugeordnet ist und verwendet wird, um Upstream Power Back-off-Parameter und elektrische Merkmale und Wellenband-Parameter einer Upstream-Leitung zu konfigurieren.

5. Verfahren nach Anspruch 1, **dadurch gekennzeichnet, dass** das Verfahren ferner umfasst: die Bereitstellung eines virtuellen Rauschprofils (395), das direkt der VDSL2-Leitung (310) zugeordnet ist und verwendet wird, um zugehörige Parameter von Upstream- und Downstream-Transmitter-bezogenen virtuellen Störgeräuschen auf der Leitung zu konfigurieren.

6. Verfahren nach Anspruch 1, **dadurch gekennzeichnet, dass** das Upstream-Ratenprofil (320) ferner folgende Konfigurationsparameter umfasst: eine minimale Upstream-Reservierungsrate, eine maximale Upstream-Reservierungsrate, ein Upstream-Ratenanpassungsverhältnis, eine minimale Rate in einem Zustand von niedrigem Leistungsverbrauch, eine aktuelle maximale Upstream-Fehlerrate, eine obere Einstellungsgrenze für eine Upstream-Rate, eine untere Einstellungsgrenze für die Upstream-Rate und eine aktuelle Service-Upstream-Rate, verwendet bei der Definition von Anwendungsszenarien.

7. Verfahren nach Anspruch 1, **dadurch gekennzeichnet, dass** das Downstream-Ratenprofil (330) ferner folgende Konfigurationsparameter umfasst: eine minimale Downstream-Reservierungsrate, eine maximale Downstream-Reservierungsrate, ein Downstream-Ratenanpassungsverhältnis, eine minimale Rate in einem Zustand von niedrigem Leistungsverbrauch, eine maximale Downstream-Fehlerrate, eine obere Einstellungsgrenze für eine Downstream-Rate, eine untere Einstellungsgrenze für die Downstream-Rate und eine aktuelle Service-Downstream-Rate, verwendet bei der Definition von Anwendungsszenarien.

8. Verfahren nach Anspruch 1, **dadurch gekennzeichnet, dass** das Rauschspannenprofil (360) ferner folgende Konfigurationsparameter zur Anpassung von Umgebungsrauschen umfasst: eine Downstream-Zielrauschspanne, eine Upstream-Zielrauschspanne, eine maximale Downstream-Rauschspanne, eine maximale Upstream-Rauschspanne, eine minimale Downstream-Rauschspanne und eine minimale Upstream-Rauschspanne.

9. Verfahren nach Anspruch 1, **dadurch gekennzeichnet, dass** die Interleaving-Verzögerung und das Impulsrauschschutzprofil (350) ferner folgende Konfigurationsparameter zur Anpassung einer Interleaving-Verzögerung der Leitung und eines Impulsrauschschutzes umfassen: einen erzwungenen Impulsrauschschutz, einen minimalen Impulsrauschschutz von jedem Zwischenträger, einen minimalen Impulsrauschschutz 8 kHz von jedem Zwischenträger und eine maximale Interleaving-Verzögerung von jedem Zwischenträger.

## Revendications

1. Méthode de gestion de configuration de boucle d'abonné numérique à très haut débit binaire de seconde génération (VDSL2) sur la base de scénarios réels d'application de service, comprenant : la fourniture d'une ligne VDSL2 (310) et d'un profil de débit en liaison montante (320), d'un profil de débit en liaison descendante (330), d'un profil de marge de bruit (360), d'un profil de retard d'entrelacement et de protection contre du bruit impulsionnel (350) et d'un profil de spectre de puissance (340),

   dans laquelle

   la ligne VDSL2 (310) est utilisée pour spécifier le profil de débit en liaison montante et le profil de débit en liaison descendante, et pour configurer un état de gestion de puissance ;

   le profil de débit en liaison montante (320) est utilisé pour configurer un débit de données en liaison montante de la ligne ;

   le profil de débit en liaison descendante (330) est utilisé pour configurer un débit de données en liaison descendante de la ligne ;

   le profil de marge de bruit (360) est utilisé pour configurer une marge de bruit cible en liaison montante, une marge de bruit cible en liaison descendante et des paramètres de marge de bruit de la ligne ;

   le profil de retard d'entrelacement et de protection contre du bruit impulsionnel (350) est utilisé pour configurer une protection contre du bruit impulsionnel forcé, une protection minimale contre des impulsions sur chaque sous-porteuse et un paramètre de retard d'entrelacement maximal sur chaque sous-porteuse ; et

   le profil de spectre de puissance (340) est utilisé pour configurer un profil de densité spectrale de puissance d'une sous-porteuse,

   la méthode étant **caractérisée en ce que** tous lesdits profils sont directement associés à la ligne VDSL2.

2. Méthode selon la revendication 1, **caractérisée en ce que** la méthode comprend en outre : un profil d'interférences radiofréquences (RFI) (370) qui est directement associé à la ligne VDSL2 (310) et est utilisé pour configurer des paramètres liés à une réjection d'interférences radiofréquences sur la ligne.

3. Méthode selon la revendication 1, **caractérisée en ce que** la méthode comprend en outre : un profil de configuration de recul de puissance en liaison descendante (380) qui est directement associé à la ligne VDSL2 (310) et est utilisé pour configurer des paramètres de recul de puissance en liaison descendante pour une adaptation aux caractéristiques électriques d'un câble d'une ligne de liaison descendante.

4. Méthode selon la revendication 1, **caractérisée en ce que** la méthode comprend en outre : la fourniture d'un profil de configuration de recul de puissance en liaison montante (390) qui est directement associé à la ligne VDSL2 (310) et est utilisé pour configurer des paramètres de recul de puissance en liaison montante et des paramètres de caractéristiques électriques et de bande d'ondes d'une ligne de liaison montante.

**5.** Méthode selon la revendication 1, **caractérisée en ce que** la méthode comprend en outre : la fourniture d'un profil de bruit virtuel (395) qui est directement associé à la ligne VDSL2 (310) et est utilisé pour configurer des paramètres liés à des bruits virtuels se rapportant à un émetteur de liaison montante et de liaison descendante sur la ligne.

**6.** Méthode selon la revendication 1, **caractérisée en ce que** le profil de débit en liaison montante (320) comprend en outre les paramètres de configuration suivants : un débit de réservation minimal en liaison montante, un débit de réservation maximal en liaison montante, un taux d'adaptation de débit en liaison montante, un débit minimal dans un état bas de consommation d'énergie, un taux d'erreur maximal en liaison montante, une limite supérieure de réglage pour un débit en liaison montante, une limite inférieure de réglage pour le débit en liaison montante et un débit réel en liaison montante de service utilisé dans des scénarios définis d'application.

**7.** Méthode selon la revendication 1, **caractérisée en ce que** le profil de débit en liaison descendante (330) comprend en outre les paramètres de configuration suivants : un débit de réservation minimal en liaison descendante, un débit de réservation maximal en liaison descendante, un taux d'adaptation de débit en liaison descendante, un débit minimal dans un état bas de consommation d'énergie, un taux d'erreur maximal en liaison descendante, une limite supérieure de réglage pour un débit en liaison descendante, une limite inférieure de réglage pour le débit en liaison descendante et un débit réel en liaison descendante de service utilisé dans des scénarios définis d'application.

**8.** Méthode selon la revendication 1, **caractérisée en ce que** le profil de marge de bruit (360) comprend en outre les paramètres de configuration suivants pour adapter des bruits environnementaux : une marge de bruit cible en liaison descendante, une marge de bruit cible en liaison montante, une marge de bruit maximale en liaison descendante, une marge de bruit maximale en liaison montante, une marge de bruit minimale en liaison descendante et une marge de bruit minimale en liaison montante.

**9.** Méthode selon la revendication 1, **caractérisée en ce que** le profil de retard d'entrelacement et de protection contre du bruit impulsionnel (350) comprend en outre les paramètres de configuration suivants pour adapter une protection contre un retard d'entrelacement de la ligne et un bruit impulsionnel environnemental : une protection contre du bruit impulsionnel forcé, une protection minimale contre du bruit impulsionnel de chaque sous-porteuse, une protection minimale contre du bruit impulsionnel à 8 kHz de chaque sous-porteuse et un retard d'entrelacement maximal de chaque sous-porteuse.

```
                    ┌─────────────────┐
                    │   VDSL2 line    │────── 110
                    └─────────────────┘
                             │
                             ▼
                    ┌─────────────────┐
                    │ Line configuration │──── 120
                    │    template     │
                    └─────────────────┘
              130         /        \
                  ┌──────────┐    ┌──────────────────┐
                  │ Service  │    │  Power spectrum  │
                  │configuration│  │configuration profile│
                  │ profile  │    └──────────────────┘
                  └──────────┘              \
                       │                    140
                       ▼
                  ┌──────────┐
                  │ Channel  │──── 150
                  │configuration│
                  └──────────┘
```

**Fig.1**

```
                    ┌─────────────────┐
                    │   VDSL2 line    │────── 210
                    └─────────────────┘
                             │
                             ▼
                    ┌─────────────────┐
                    │ Line configuration │──── 220
                    │    template     │
                    └─────────────────┘
                       /          \
            ┌──────────────┐    ┌──────────────┐
            │Line configuration│ │   Channel    │
            │   profile    │    │configuration │
            └──────────────┘    │   profile    │
                    \           └──────────────┘
                    221                  \
                                         250
```

**Fig.2**

EP 2 369 783 B1

```
                              ┌──────────────┐  310
                              │  VDSL2 line  │
                              └──────┬───────┘
```

| Upstream rate profile | Downstream rate profile | Power spectrum profile | Interleaving delay and impulse noise protection (INP) profile | Noise margin profile | RFI profile | Downstream power back-off (DPBO) profile | Upstream power back-off (UPBO) profile | Virtual noise profile |

320    330    340    350    360    370    380    390    395

**Fig.3**